# EUROPEAN PATENT SPECIFICATION

(11) **EP 1 644 671 B1**
(45) Date of publication and mention of the grant of the patent: **13.02.2008**
(21) Application number: 04736768.5
(22) Date of filing: 14.06.2004
(51) Int. Cl.: F24J 3/08

(54) **A METHOD OF CONSTRUCTING A GEOTHERMAL HEAT EXCHANGER**
VERFAHREN ZUR HERSTELLUNG EINER ERDWÄRMESONDE
PROCEDE DE CONSTRUCTION D'UN ECHANGEUR THERMIQUE GEOTHERMIQUE

(30) Priority: 03.07.2003 US 613511
(43) Date of publication of application: 12.04.2006
(73) Proprietor: Enlink Geoenergy Services, Inc., Houston, TX 77084 (US)
(72) Inventor: JOHNSON, Jr., Howard, Edwin, Kennesaw, GA 30144 (US)
(74) Representative: Lucas, Brian Ronald
(86) International application number: PCT/GB2004/002552
(87) International publication number: WO 2005/003648

(56) References cited:
- DE-A- 3 114 262
- US-A- 4 912 941
- US-A- 5 562 169
- US-A- 6 000 459
- US-A1- 2003 010 652

## Description

The present invention relates to a method of constructing a geothermal heat exchanger.

A geothermal heat exchanger utilises the earth as a heat source or sink. By means of heat exchange fluid flowing through a pipe buried in the earth, heat can move into or out of the fluid. The fluid can be used to warm or cool a space in a building for example.

Often the energy efficiency of a geothermal heat pump (GHP) or exchanger system is far superior to traditional heating, ventilating and air-conditioning (HVAC) alternatives such as air source heat pumps, boilers, chillers, furnaces, cooling towers, etc. A geothermal heat pump can often save about fifty percent of the energy required to operate a traditional HVAC system for heating or cooling the same space.

One reason why this energy efficient GHP heating/cooling technology is not more widely used is that the initial installation cost is usually higher than for traditional HVAC systems. Often fifty percent or more of the installation cost of a GHP system is for constructing one or more geothermal heat exchanger in the ground. Despite the monetary savings available in heating/cooling a space with GHP technology, it can take several years for the installation cost to be recovered. Thus it is desirable that the cost of installation be kept to a minimum so that GHP technology will be more widely considered and chosen.

The construction of a geothermal heat exchanger involves drilling a borehole in the ground and installing a heat loop therein. The heat loop is grouted in place with a thermally conductive medium for efficient heat transfer either from or into the surrounding earth. However, when geological conditions are unusually difficult, drilling and completion costs can dramatically increase, and the cost of installing a geothermal heat pump system can become prohibitive.

Typically a borehole is drilled to a depth of between about 46m and 153m (150 to 500 feet) deep, a small diameter (usually 0.02m (0.75 inch) to 0.03m (1.25 inch) diameter) polyethylene pipe loop is inserted into the borehole, and the loop is grouted in place. Trenches are then dug between such multiple boreholes and earth loop ends are connected together in parallel to a common header, and then connected to heat pumps. Water is then circulated through this closed loop system, and heat is absorbed from or transferred to the earth, as the heat pumps require. If so called "direct exchange" heat pump technology is utilized, often copper refrigerant lines are placed in direct contact with the earth, and the heat exchange is accomplished directly with the earth instead of through a secondary water-to-refrigerant heat exchange. Both the more widely used "water source" heat pump technology systems and the direct exchange heat pump technology are available. Both systems are similar insofar as the drilling and completion problems with the earth heat exchangers are concerned.

One typical earth loop heat exchanger design for a small school might require the drilling of about 100 holes, each to a depth of about 91m (300 feet), while a large school might require about 1000 such holes for example. High drilling rates and consistent production is preferred for keeping down the costs of the earth heat exchanger. One type of drilling arrangement used to build a geothermal heat exchanger system provides a large number of holes that are relatively deep. Rapid mobilization and set-up between closely spaced holes, fast drilling rates of penetration, and hole stability are critical. However, the drilling technology used in other drilling disciplines is not well suited or optimized for such geothermal applications. For example, quarry drilling, seismic drilling, and construction drilling all require large numbers of holes in a relatively compact geographic area, but the holes required are relatively shallow in depth, often less than about 30m (100 feet) deep. In water well drilling and geotechnical investigation drilling, the holes are drilled deeper, but they are relatively small in number. With ancillary operations such as sampling, logging, setting pumps, installing controls and monitoring devices, etc., the speed at which water wells or environmental wells are drilled becomes less critical than it is on geothermal projects.

In addition, many drill rigs are usually designed to drill optimally in only one specific type of formation. Unconsolidated formations such as sand/clay/gravel formations are usually drilled best using mud rotary techniques. The mud rotary drill system utilizes a mud mixing/circulation system incorporating duplex or triplex mud pumps. The drilling mud circulation system transports the drilled spoils out of the hole and also serves to help keep the drilled hole from collapsing. If hard or rock conditions are encountered, drilling progress slows down significantly. If extremely unstable soil conditions are encountered, the mud weight must be regulated carefully to prevent hole collapse and/or to prevent "mining" or over-excavation from occurring.

Constant mud regulation can slow drilling progress significantly. The production rate in mud rotary applications can vary widely and is affected by the formation geology and by the expertise of the driller. The driller is required to know when to thicken up, thin out, or weight up drilling mud; which drill bit to select; what rotation speed to use; how much circulation time is adequate; what additives to put in the mud; and how much pull-down force to apply, etc. These variables can change significantly as the lithology changes with increasing depth. In addition, mud drilling can significantly increase the thermal resistance of the borehole in the near-borehole area by building a wall-cake of poorly thermally conductive bentonite drilling mud - thus requiring additional holes to be drilled.

At another extreme, hard formations such as limestone, sandstone, granite, etc. are usually drilled most economically with downhole hammers powered by compressed air. Even where drilling conditions are predominantly rock, there is usually a layer of unconsolidated overburden (e.g. sand, clay, gravel) on top of the rock which must be penetrated and stabilized before the downhole hammers can effectively begin to drill the rock. If the overburden is very soft or unstable, the top portion of the hole must be supported with casing pipe, usually steel, at least for a depth down to the rock. If the overburden is not stabilized, the top portion of the hole will erode or be "mined out" as the rock is drilled, in extreme cases causing the drill rig to capsize. The expense of traditional overburden drilling and stabilization has made many geothermal projects' cost prohibitive.

It is only necessary to case a geothermal borehole temporarily. Once the heat exchanger pipe has been inserted and grouted in place, the casing can be removed. Not only is permanent casing expensive, it can also inhibit the thermal transfer of heat between the heat exchanger pipe and the earth. Even where carousels or magazines automatically handle drill pipe, any casing is often handled manually - using slings, ropes, and cables. In many casing operations, the casing pipe sections are welded together while tripping into the hole and cut apart with a torch as they are extracted from the hole. Besides being a physically demanding job requiring additional labour, the process of loading heavy and clumsy casing pipe is dangerous to personnel. The logistics of handling the casing pipe at the surface usually dictate the use of additional surface equipment such as forklifts, cranes, boom trucks, etc., thus incurring additional equipment rental and labour costs.

It is widely known to drillers skilled in the art that stabilizing a borehole by using steel or other casing is a reliable way to ensure borehole integrity. But it is also just as commonly acknowledged that steel casing is usually the most expensive method of stabilizing a borehole, and, because of its high cost, casing is used only as method of last resort. One standard practice of installing casing is to drill a borehole by conventional means, and then insert the casing in the pre-drilled hole. This method presumes that the hole will stand up long enough to insert the casing to the desired depth. However, if the geology is very unstable, which is often the main reason casing is being inserted, the pre-drilled hole can collapse before casing insertion can be completed. To compensate for this condition, many drilling procedures and special tools have been developed. One of the well-known concepts is simultaneous drilling while casing, in which the casing is advanced as the hole is being drilled. In some prior art systems two sets of tubulars of different diameters, i.e. drill pipe and casing pipe, are simultaneously advanced one inside the other. Often, two independent rotary drill head mechanisms are employed, each rotating the casing and drill pipe in opposite directions, and each rotary head capable of independent longitudinal travel along a common drill mast. It can be a complex task to effectively insert drill pipe inside casing, present them to two separate drill heads, clamp the different size diameters of pipe while making up and/or breaking out the threaded connections, rotate the pipe and casing in opposite directions while moving them up and down independently. The process is inherently expensive because the machine is very complicated and additional labour and equipment is required to handle the pipe and casing. Drilling production, while reliable, predictable, and fast when compared to first drilling a hole and then setting the casing afterward, is still relatively slow compared to drilling without casing.

Another prior art method of setting casing utilizes a casing hammer to hammer the casing into the ground. Once the casing is hammered in place, the earth inside the casing is drilled out. However, due to the rapid build-up of skin friction between the earth and the casing, the physical limitations of the casing, and the high power required by the hammer, casing driving is slow, and often can only be accomplished to fairly shallow depths. The casing also frequently becomes stuck and/or damaged.

Thus it is apparent that where unstable geological conditions are present, the installation of a geothermal heat exchanger may not be practical with conventional drilling techniques and/or may be prohibitively expensive. For example, using conventional drilling techniques it is possible for most drillers to set one length of casing of about 6m (20 feet) in soft formation. However, when more than one section of casing is required (i.e. the soft formation is relatively deep), the difficulty of casing the borehole increases exponentially up to a point where it is not possible to complete one hole with conventional drilling techniques. Furthermore, even if installation is successful in unstable geological conditions, the driller may not be able to extract the casing as the formation may have collapsed around it. It is too expensive to leave casing downhole (at least for geothermal heat pump applications) and highly undesirable as the heat transfer properties between the heat loop and the earth will be compromised. Thus, where difficult unstable soil conditions exists geothermal heat exchange projects are not considered because drilling is either not possible or too expensive.

It is apparent that there is a need for an improved method of construction of a geothermal heat exchanger that would allow installation of geothermal heat exchangers in unstable geological conditions, for example in soft overburden.

Preferred embodiments of the present invention are based on the insight by the applicant that application of sonic drilling techniques for construction of geothermal heat exchangers have an unexpected number of advantages that work together to improve construction of geothermal heat pumps for example in terms of time and running efficiency of the finished exchanger. Use of a sonic drill to drill the borehole improves penetration rates; this saves time on the overall construction job, particularly as a complete geothermal heat exchange system often requires a plurality of boreholes (e.g. 1000) to be drilled and heat loops installed. By pumping drilling fluid down the string of tubulars during drilling, the inside of the tubular(s) can be kept substantially free of material. When the desired depth is reached the string of tubulars provides a cased borehole, whereby collapse of the hole is inhibited whilst the remaining construction procedures are carried out. Thus the separate steps of tripping out the drill string and inserting a casing can be reduced to one step. In this way the window of time when unstable boreholes may collapse is reduced. The cased borehole is open at its upper end and lower end whereby grout can be pumped or poured into the borehole through the inside of the tubular(s); after such grouting the tubular(s) can be vibrated with the sonic drill head which reduces bridging and channelling in the grout for example. In this way the efficiency of the geothermal heat exchanger can be improved. The tubulars are recovered during or after the grouting step, whereby they can be used in construction of the next heat exchanger. Vibration assists in withdrawal of the tubulars(s) particularly where formation in the borehole has collapsed. Thus the entire construction process is faster, cheaper and results in a more efficient heat exchanger.

A sonic drill is operable to vibrate a tubular or string of tubulars generally parallel to a longitudinal axis of the tubular(s). The frequency of vibration is usually between about 30 and 180Hz (hence the name "sonic") and is variable in use by the operator. A sonic drill comprises a drill head having an oscillator and usually also a mechanism for applying rotary motion to the tubular(s). The oscillator is driven by a hydraulic motor and uses out of balance weights (counter rotating rollers) to generate high sinusoidal forces that are transmitted to a drill bit at the other end of the tubular(s). An air spring is also incorporated in the drill head in order to confine the alternating forces to the tubular(s). In use, the drill bit is vibrated up and down, is rotated and is pushed into the formation. These three movements work together to produce fast penetration rates through most types of formation, but particularly in overburden formation. The drill bit itself is usually annular in shape, whereby a sample core of formation passes into the tubular(s).

Although sonic drilling principles have been well known for many years, application of these principles has been largely dedicated to specialized areas of geotechnical investigation, mineral sampling, environmental sampling, and monitoring well construction. In these types of drilling, relatively undisturbed core samples of earth are captured inside the casing and recovered for analysis as the drilling progresses. Since the primary emphasis in these types of drilling is on gathering quality soil samples, speed is not essential, and the potential for using sonic drilling for relatively high-speed geothermal borehole production has not been previously considered. In addition, the sonic drill head and tooling used in sonic drilling can be substantially more expensive than traditional mud rotary or air drilling equipment; and, since geothermal drilling has been normally considered to be very "cheap" drilling work, the investment in "high technology" sonic equipment to drill boreholes has not been considered.

According to the present invention there is provided a method of constructing a geothermal heat exchanger, which method comprises the steps of: -
(1) drilling a borehole in the ground using a tubular; and
(2) installing a heat loop in said borehole;
characterised by the step of
(3) during step (1) vibrating said tubular and pumping drilling fluid into said tubular to urge material moved by said drilling into an annulus defined by a surface of said borehole and an outer surface of tubular, and/or into formation surrounding said borehole, whereby the inside of said tubular is kept substantially free of said material so that said heat loop may be inserted therein. The method is particularly advantageous in unstable conditions for example soft overburden (e.g. sand, clay, gravel) lying over harder formation (e.g. shale, granite, limestone). The method can be used to stabilise a borehole in the soft overburden before extending the borehole into the harder formation underneath.

In one embodiment the vibration is provided by a sonic drilling head.

Preferably, said drilling fluid is pumped at such a volume per unit time that it displaces a volume of material slightly greater than the combined volume of said tubular and the volume enclosed by said tubular to facilitate advancement of said tubular into the ground.

Advantageously, said vibration is performed so as to liquefy the material in the near-borehole zone extending along the length of said tubular.

Advantageously, said vibrating step is performed as part of said installation step. This vibrating step may be performed with a different tubular or string of tubulars than that which drilled the borehole. Thus it is envisaged that the drilling step may comprise the step of drilling using a non-vibratory drilling method, for example using a rotary drill. After this a separate tubular may be inserted into the borehole for vibration during the installation step. Vibration during the installation step helps to compact grout around the heat loop and inhibit bridging of the grout in the borehole that would otherwise reduce thermal efficiency when the geothermal heat pump is in use.

Preferably, the method further comprises the step of rotating said tubular to assist said drilling.

The drilling fluid may be polyacrylamide drilling gel, xanthum gum, guar gum, natural fluids (e.g. water), and/or synthetic drilling polymers for example.

Preferably, the method further comprises the step of forming a cased borehole by drilling to a desired depth whilst adding one or more tubular to said tubular to form a string of tubulars. One advantage of this is that borehole collapse is inhibited, particularly in unstable geological conditions. Another advantage is that the borehole is cased whilst drilling, thereby saving time. In one embodiment, the borehole remains at least partially cased during the installation step. During installation an un-cased part of the borehole may be substantially filled with grout so that the borehole is supported substantially at all times, either by a filler material, the tubular(s) or a combination of both.

Advantageously, step (2) is performed before or whilst withdrawing said string of tubulars from said borehole. In this way the risk of borehole collapse during the installation step is reduced.

Preferably, step (2) comprises the steps of inserting said heat loop into an interior of said string of tubulars, and urging said heat loop toward the bottom of said borehole.

Advantageously, the method further comprises the step of substantially filling said heat loop with a fluid before said insertion step.

Preferably, step (2) comprises the step of grouting said heat loop in said borehole. In one embodiment the grouting step is substantially completed (i.e. the borehole substantially filled) before withdrawal and vibration of said tubular. Additional grout may need to be added to replace the volume of the tubular as it is withdrawn. During withdrawal, vibration pauses when a tubular needs to be removed from the string. The grout may comprise a material for slowing or delaying setting of the grout to permit time for the compaction of the grout by vibration to be completed throughout the borehole.

Advantageously, said vibrating step is performed by vibrating said tubular with a sonic drill head, whereby a drill bit at one end of said tubular is caused to vibrate in a direction substantially parallel to a longitudinal axis of said tubular. In one embodiment substantially the entire tubular or string of tubulars is caused to vibrate.

Preferably, a frequency of said vibration is between approximately 30Hz and 150Hz.

Advantageously, said drilling step comprises the step of using a drill bit having a substantially annular body provided with a cutting surface. The body is open to the volume enclosed by the tubular, whereby fluid can pass through said tubular into the borehole.

Preferably, said body has an outer diameter that is greater than an outer diameter of said tubular.

Advantageously, said body has an inner diameter that is substantially equal to an inner diameter of said tubular.

Preferably, the method further comprises the steps of inserting a drilling means into said tubular or string of tubulars, moving said drilling means to the bottom of the borehole, and drilling an extension to said borehole. One advantage of this is that soft overburden can be drilled, cased and stabilised before drilling into more solid formation e.g. rock. The drilling means may be from the group consisting of: a coil tubing drilling system; a compressed air drilling system; and a downhole motor drilling system.

Advantageously, the method further comprises the step of repeating steps (1) to (3) to install a plurality of geothermal heat exchangers on the same site.

Preferably, the method further comprises the step of connecting the or each heat loop with a manifold for circulating heat exchange fluid therethrough.

The method according to the present invention provides for the efficient construction of a geothermal heat exchanger and, in one particular aspect, such a system for use with a ground source heat pump heating/refrigeration system (commonly referred to as a geothermal heat pump or "GHP" system). In one aspect such a heat exchange system is installed according to the method set out above by using a sonic drilling and casing machine to efficiently drill and stabilize earth boreholes until the heat transfer loop(s) can be inserted into the drilled hole and grouted in place. After installation of the heat transfer loop(s) and grouting is completed, the drilling machine extracts the temporary casing from the borehole, leaving the grouted heat transfer loop(s) in place. The recovered casing can then be used on subsequent boreholes.

Many problems and the related expense associated with drilling in difficult or unstable geological conditions using traditional mud rotary or air drilling techniques are significantly mitigated or eliminated with a method according to the present invention - thereby increasing drilling rates and efficiency, loop insertion rates and efficiency, and grouting productivity. Consequently, earth loop heat exchanger construction costs are reduced, thus making energy-saving geothermal heat pump technology more competitive on a "first cost" basis as compared to traditional air conditioning or refrigeration alternatives.

Using a method according to the present invention a steel cased borehole 0.127m (5 inches) in diameter 107m (350 feet) deep in an unconsolidated formation (e.g., but not limited to, sandy clay) is drilled in 20 minutes if no unexpected drilling conditions are encountered. In one aspect the method may be performed using a drilling rig that is a crawler-mounted or truck-mounted machine. In one aspect only a single operator is required to perform the complete drilling and casing function.

Preferably, the borehole is at least 91m (300 feet) deep; the borehole is drilled, the heat exchange pipe loop is lowered, the grout is introduced, and the casing is extracted within about one hour.

Advantageously, the method further comprises introducing water into the heat exchange pipe loop to inhibit collapse of the heat exchange pipe loop.

Preferably, the heat exchange pipe loop is substantially filled with water and is sealed following filling with water.

Advantageously, the water is pumped at a pressure of about 70,300 kg m⁻² (100 p.s.i).

Preferably, the grout includes set retardant material.

Advantageously, the heat exchange pipe loop is made from material from the group consisting of polyethylene, steel, aluminium, aluminium alloy, zinc, zinc alloy, composite and fibreglass.

The present invention, in at least certain aspects, provides a method for installing a heat exchange pipe loop in a borehole, the method including drilling a borehole down into earth using a sonic drill head, the sonic drill head having casing connected thereto, a drill shoe connected to a lower end of the casing so that movement (oscillation, stroking up and down, and/or oscillation and rotation) of the casing by the sonic drill head drills the borehole down into the earth, pumping a mixture of water and drilling fluid down into the casing during drilling, out through a lower end of the casing, and up to earth surface in an annular space between an interior surface of the borehole and an exterior surface of the casing so that drilled material flows from the borehole to the earth surface, lowering a heat exchange pipe loop down into the casing, introducing grout into the casing around the heat exchange pipe loop, the grout displacing an amount of the mixture of water and drilling fluid from within the casing, and extracting the casing from the borehole.

In one embodiment, a method according to the present invention comprises steps of: drilling; earth loop insertion; grouting; and casing recovery.

According to another aspect of the present invention there is provided a method for installing a heat exchange pipe loop in a borehole, the method comprising
drilling a borehole from an earth surface down into earth using sonic apparatus with a sonic drill head, the sonic drill head having casing connected thereto, drill apparatus connected to a lower end of the casing so that movement of the casing by the sonic drill head drills the borehole down into the earth, the casing having an interior,
pumping drilling fluid down into the casing during drilling, down through the casing and out through the drilling apparatus, and upwardly in an annular space between an interior surface of the borehole and an exterior surface of the casing so that drilled material flows upward through the annular space in the borehole preventing drilled material from flowing up into the casing's interior,
lowering a heat exchange pipe loop down into the casing,
introducing grout into the casing around the heat exchange pipe loop, the grout displacing an amount of the mixture of drilling fluid from within the casing, and
extracting the casing from the borehole.

Preferably, the method further comprises introducing grout into the casing as the casing is extracted from the borehole.

Advantageously, the method further comprises introducing grout into the borehole around the heat exchange pipe loop after the casing has been extracted from the borehole.

Preferably, the method further comprises oscillating the casing with the sonic apparatus as the casing is extracted from the borehole.

Advantageously, the oscillating of the casing accomplishes at least one function from the group consisting of: facilitation of casing extraction; inhibiting grout bridging; de-aerating the grout; increasing density of the grout; oscillation of drilled material; and reduction of friction between the casing and the grout.

Preferably, the method further comprises oscillating the casing as grout is introduced into the casing.

Advantageously, the method further comprises adding drilling fluid additive to the drilling fluid during drilling.

Preferably, the sonic apparatus is on and is movable by a truck or crawler apparatus, the method further comprising
moving the sonic apparatus adjacent a location of the borehole.

Advantageously, the method further comprises pumping a volume of drilling fluid into the casing that is greater than a volume of drilled material.

Preferably, the casing comprises a string of interconnected pieces of casing and pieces of casing as needed are added to the string as drilling progresses.

Advantageously, the drill apparatus is a bit or drillshoe with an outer diameter within 110% of an outer diameter of the casing.

Preferably, the drilling produces drilled material and substantially all of the drilled material does not exit from the borehole at the earth surface.

Advantageously, the method further comprises
removing the drill apparatus from the lower end of the casing,
inserting a secondary drilling apparatus through the casing, and
drilling an extension of the borehole with the secondary drilling apparatus.

Preferably, the secondary drilling apparatus is from the group consisting of: a coil tubing drilling system; a compressed air drilling system; and a downhole motor drilling system.

For a better understanding of the present invention reference will now be made by way of example to the accompanying drawings in which: -
Fig. 1 is a side cross-section view (along line 1A-1A of Fig. 1B) of a drill bit and part of a tubular useable in a method according to the present invention;
Fig. 1B is a underneath plan view of the drill bit of Fig. 1A;
Figs. 2 to 7 are side views in cross section of six stages during construction of a geothermal heat exchanger by a first embodiment of a method in accordance with the present invention; and
Figs. 8 and 9 are a side view in cross section of two stages during construction of a geothermal heat exchanger by a second embodiment of a method in accordance with the present invention.

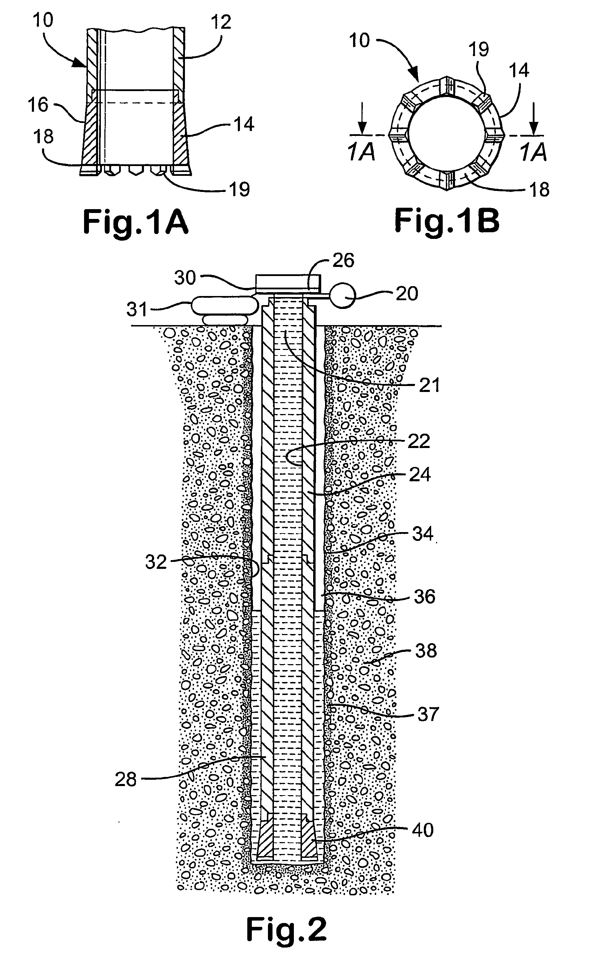

Referring to Figs. 1A and 1B a drilling apparatus generally identified by reference numeral 10 comprises a tubular 12 (e.g. a piece of drill pipe or casing) interconnected with a string of tubulars (casing or drill pipe) that is connected in turn to a sonic drill head (not shown in Fig. 1A) of a sonic drilling system above the ground surface. A drill bit comprising a tubular 14 with a body 16 having a portion with an outer diameter greater than that of the tubular 12 has a lower portion 18 with a plurality of spaced-apart drilling teeth 19 providing a cutting surface. An inner surface of the body 16 is substantially cylindrical. An outer surface of the body 16 is substantially in the form of a truncated cone. The outer surface of the body 16 increases in diameter toward the drilling teeth 19.

It is within the scope of this invention for the teeth 19 to be deleted and/or for the tubular combination 12, 14 to be a single integral piece. It is within the scope of this invention using the teeth 19 (or deleting them) to hardface or provide with a layer of tungsten carbide the lower end of the body 16 and/or the interior of the lower end of the body 16. Optionally, the tubular 14 can be releasably connected to the tubular 12 so that it can be abandoned downhole; or, with a suitably configured tubular 14 so that it can be retrieved while the tubular 12 and the casing string remain in place. Optionally any known solid, fullface drill bit and associated apparatus may be used. Such a bit is, in one aspect, modified with one or more holes through a lower face thereof to permit fluid flow through the bit. Optionally, any suitable known casing shoe may be used for the tubular 14.

The sonic drilling system (not shown) has a sonic rotary drill head; an on-board carousel or magazine for both drill pipe and casing; an onboard water pump; an onboard air compressor; a drill mast to which is movably connected a sonic drilling head; movement apparatus for moving the sonic drilling head up and down (and casing connected thereto); and, optionally, a pump system for pumping drilling fluid and/or additives. The sonic drill head has in use: an oscillation frequency of between about 30 to 150 hertz, a rotating speed of 0 to 150 rpm, and a torque of about 10,168 Nm (7, 500 1bs-ft.), such as the 50K (TM) system made by Sonic Drill Corporation of Vancouver, B.C. (see www.sonic-drill.com); an on-board carousel or magazine with an automatic drill rod/casing handling mechanism; an onboard water pump that is a positive displacement type capable of pressures in excess of 7.7×10⁵kg m⁻² (1100 psi) at flow rates of 0.005m³s⁻¹ (90 gallons/minute) (like a Weatherford (TM) 2075 pump); an onboard air compressor for delivering air at 3.5×10⁵kg m⁻² (500 psi) at 0.4m³s⁻¹ (900 scfm), e.g. a Sullaire 900XHHDL (TM) system; and a small metering pump for pumping a drilling fluid and/or additives, e.g., but not limited to, polyacrylamide drilling gel, xanthum gum, guar gum, natural fluids, and/or synthetic drilling polymers.

Referring to Fig. 2 a sonic drilling system 30 (similar to that described in Fig. 1) uses a casing string 24 to drill a borehole 34. The casing string 24 comprises a tubular 28 provided at its lower end with a drill bit 40, similar to the drill bit described with reference to Fig. 1. Water 21 is pumped (e.g. a rate of 0.0056m³s-¹ (90 gallons per minute) at 7.7×10⁵kg m⁻² (1100 psi)) with a pump system 20 down into the interior 22 of the casing string 24 connected to a sonic drill head 26 of the sonic drilling system 30 (optionally movable on a mover 31, e.g., a truck or crawler).

During drilling, the pumping system 20 provides a constant positive flow of water (or other drilling fluid) into the casing string 24 which, in one aspect, extends down at least to the level of the lowermost part of the drill bit 40 so that drilled material is prevented from backing up into the drill bit 40 and into the casing string 24.

The water is pumped at such a volume per unit time that it displaces a volume of material slightly greater than the combined volume of the casing string and the volume enclosed by the casing string. This helps the casing string to be advanced into the earth. In one aspect, the volume of fluid pumped downhole is slightly greater than the volume of earth displaced by the casing as it is advanced into the earth. By maintaining the drill fluid pumping rate at a slightly greater rate than the casing advancement rate, the end of the open casing remains unobstructed by the earth material being displaced.

As the sonic drilling system 30 moves and oscillates the casing string 24 and the drill bit 40, fluid moves out from the drilling apparatus 40 and up into an annulus 36 between the exterior of the casing string 24 and an interior wall 32 of a borehole 34. Friction is reduced between the exterior of the drilling apparatus 40 and the interior wall 32 of the bore 34 being drilled and friction is reduced between the exterior of the casing string 24 and interior wall 32.

Drilled material, which includes drilled material that is liquefied by the sonic drilling action, moves upwardly in the annulus 36 and, in a suitable earth formation 38 moves into interstitial spaces in the earth formation 38. At least some of this material 37 is consolidated at the edges of the borehole 34. In certain aspects most, or even substantially all, of drilled material enters the formation and none, or relatively little, drilled material comes to the surface with water, etc. flowing upwardly in the annulus 36.

Drilling in this fashion can result in fewer drilled cuttings or "spoils" being returned to the surface as compared to the amount of such cuttings produced with traditional mud rotary drilling. In mud rotary drilling, circulation is maintained in the annular space between the drill pipe and the native earth wall. The primary purpose for this mud circulation is to transport the cuttings produced by the drill bit to the surface. If circulation is lost to the formation, unstable portions of the borehole wall can collapse and pack around the drill pipe, thus trapping the drill assembly in the hole. Since the drill bit is usually much larger in diameter than the drill pipe, extraction of the drill pipe from the hole is often a difficult and expensive consequence. Frequently, entire strings of drill pipe are permanently lost. At the very least, productivity is negatively affected. If drilling proceeds as planned and circulation is maintained, large quantities of drilled cuttings are produced at the surface. In many formations a resulting borehole can "wash out," resulting in a much larger hole than desired with a diameter significantly larger than the diameter of the bit being used. This can increase spoils handling costs; increase grout costs; and decrease overall productivity. In some instances, project requirements or government regulations, etc. may require that the drill spoils to be removed from the jobsite, resulting in high material handling and transportation costs. Often, the drill spoils must be disposed of as hazardous or even toxic waste, escalating project costs even further. Since hundreds of holes are often drilled at the same site on a geothermal project, these disposal costs are very significant.

Often unconsolidated geological formations comprise interstitial spaces of about 25% to 45% by volume. There are also naturally occurring seams, voids, caverns, cracks, crevices, etc., which are responsible for undesirable "lost circulation" described above. During sonic drilling, the resonating oscillations along the full-length of the casing string tend to liquefy the drill spoils and compact them into the interstitial space throughout the near borehole area and into any seams or lost circulation zones. Unless the formation is very tight and has no void space, very few if any cuttings are produced at the surface. Since the casing oscillates and rotates, and since the casing string has no large bit on the end, there is a significantly reduced possibility that the drill string will become stuck if circulation back to the surface is lost. Therefore, the cost of dealing with drill spoil returns is greatly reduced or eliminated, and the jobsite also remains much cleaner and drier.

Additional casing pipes are added to the casing string 24 sequentially and the drilling operation continues until the borehole 34 reaches the desired depth. The result is a steel-cased borehole, open and unobstructed at the bottom end as shown in Fig. 2.

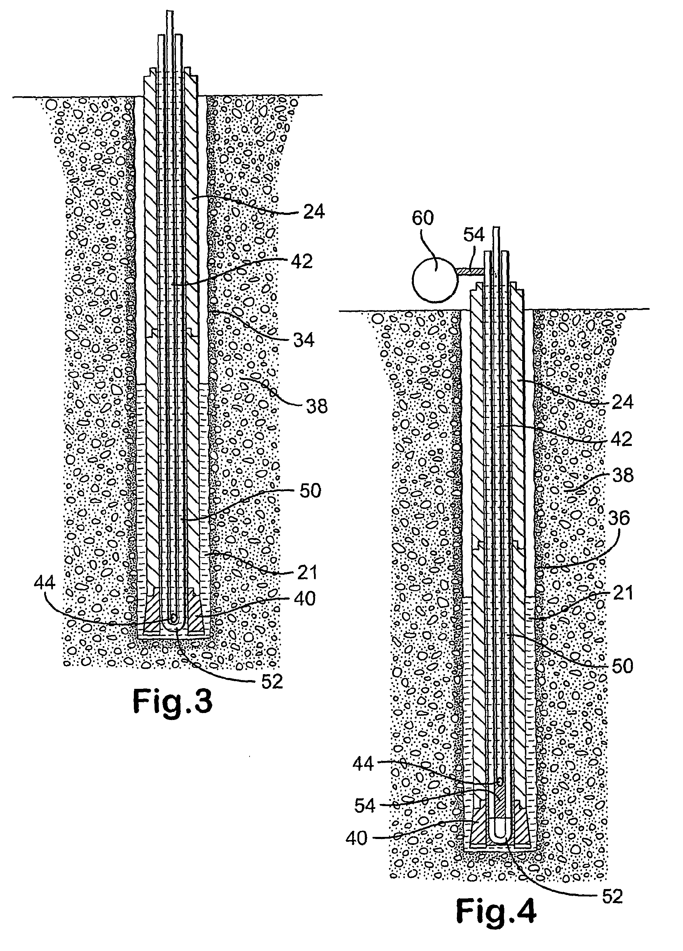

Referring to Fig. 3, a heat loop 50 has been pushed into the borehole 34 with a tremmie pipe 42 (installed, e.g., using a coiled tubing unit). The heat loop 50 is made from polyethylene and is filled with water, pressurized, and sealed, before being lowered into the cased borehole. The tremmie pipe 42 has a bottom opening 44 through which grout is pumped. Optionally, a lowermost U-bend member 52 (e.g., as disclosed in our earlier application WO 99/63282 or any known U-bend member) is used at the bottom of the heat loop 50. In one particular aspect the tremmie pipe 42 is made of polyethylene, but it is within the scope of the present invention to make it from any suitable material, including, but not limited to, fibreglass, plastic, metal, metal alloys, composites and/or a combination of any of these.

Fig. 4 illustrates the beginning of the grouting part of the construction operation in which grout 54 is pumped with a grout pumping system 60. The grout 54 displaces the water in the casing and flows out from the opening 44, around the U-bend 52, and begins to rise within the interior 21 of the casing string 24 and the interior of the drill bit 40.

Since the drill bit 40 is annular, passage of the grout 54 is not inhibited and some exits below the drilling apparatus 40 and rises in the annular space 36. As the tremmie pipe is released from the earth loop 50 and grout pumping commences, the tremmie pipe 42 is raised within the casing string 24 (e.g., by a coiled tubing unit). The displaced water flows out from the top of the borehole 24 for recovery or disposal thereof.

The grout 54 is a thermally conductive mixture that comprises suitable additives to retard the set of the grout and to maintain the grout substantially in a fluid state until the temporary casing can be extracted. For example, in certain aspects cement setting retardant materials, such as, but not limited to, sodium or calcium lignosulfonate, are added in an amount sufficient to give about 1 to 24 hours of set delay. A long chain polysaccharide xanthan gum additive, e.g. DUOVIS^{™} may be added in a quantity ranging from 0.0001 to 0.0020 parts by dry weight to reduce pumping friction. Bentonite clay (sodium montmorillinite) in an amount from about 6 percent to about 20 percent of the weight of the water or 1 to 5 percent of the weight of the dry grout components may be added to increase plasticity for fluid loss control (to control loss of fluid from the mixture during pumping which could result in sand bridging in the mixture and plugging of a tremmie pipe).

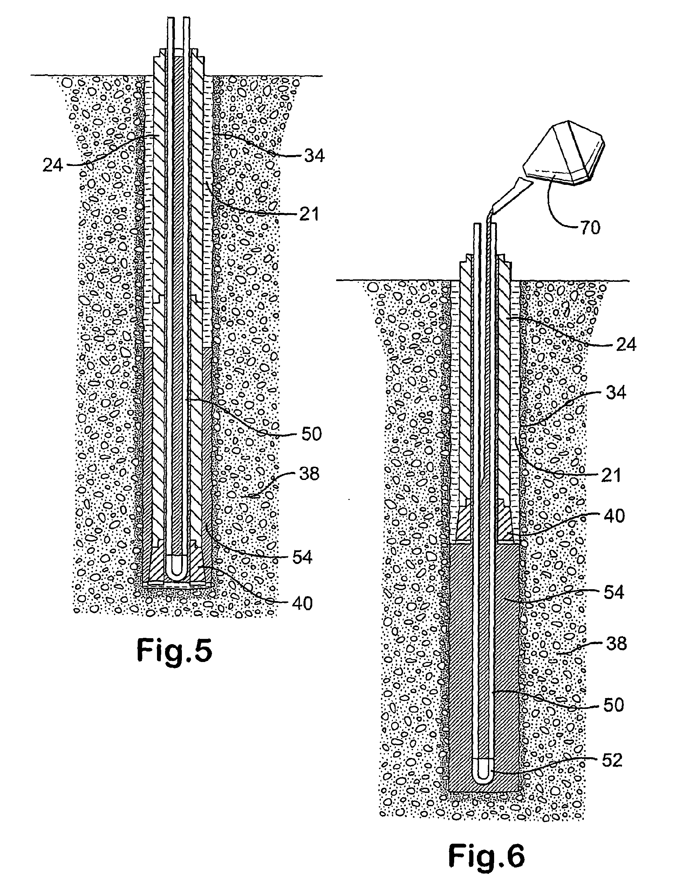

As shown in Fig. 5 some of the grout 54 that has moved up in the annular spaced 36 has moved into the formation 38. The casing string 24 remains in place during the grouting operation; but it is within the scope of the present invention to remove the casing string 24 and the drill bit 40 and then commence a grouting operation. In certain aspects this is advantageous when the earth formation is cemented sands or high in clay content or exhibits high stability properties and the risk of borehole collapse is minimal. In one particular aspect the borehole 34 has a diameter of about 0.127m (5") and the drilling apparatus 40 has an outer diameter of about 0.11m (4½") as its widest part.

Once the borehole 34 is substantially full of grout, extraction of the casing string 24 can begin.

Referring to Fig. 6 the casing string 24 and drill bit 40 are extracted from the borehole 34. Grout 54 is either pumped by a grout pumping system (not shown) or poured with a pouring system 70 into the interior of the casing string 24 as it is extracted with movement apparatus of the sonic drilling system to replace the volume of the casing string. Grout 54 moving into the borehole 34 around the earth loop 50 displaces the water 21 upwardly and out from the borehole 34, thus minimizing (or preventing) the influx of undesirable air into the grout 54. In certain aspects some of the grout flows into the formation 38. The casing string 24 is vibrated by the sonic drill head as it is pulled out from the borehole 34. This inhibits undesirable bridging of the grout; de-aerates the grout; reduces voids in the grout; and increases grout density thereby increasing thermal conductivity of the grout. This also reduces the time required for a grouting operation. The use of the casing string 24 reduces the risk of collapse of the borehole 34 during drilling, during grouting, and during casing extraction. In this way the borehole 34 is supported substantially at all times, either by the casing string 24, the grout 54 or a combination of both.

The vibration may be done substantially continuously or periodically for example during withdrawal of the casing string 24. The vibration liquefies (or fluidizes) and compacts the grout 54 thereby inhibiting "bridging". Without the vibration, the grout can tend to pack off around the heat loop 50 and cause the heat loop and the grout to be extracted with the casing instead of remaining down within the borehole. The vibration reduces skin friction between the casing wall and the earth, thus reducing the tendency of the casing to become stuck in the earth. Often this tendency of casing to become stuck in the earth is a reason that the use of casing is a last resort. Using the sonic drilling apparatus produces a better grouting job, reduces grout bridging, and facilitates the extraction of casing while the earth loop and the grout remain in place in the borehole. However, as the casing is removed, the level of the fluid grout in the bore will drop, since the casing that has been removed no longer displaces it. Consequently, additional grout can be added as desired at certain intervals during the casing extraction procedure (for example whilst a piece of casing is removed from the casing string - usually about every 4.6m (15 feet)) to ensure that the grout is completely surrounding the heat exchange pipe. This also impedes collapsing of the earth around the heat exchange pipe. The fluid grout flows around the heat exchange pipe as the temporary casing pipe is extracted, thus encapsulating and thermally coupling the heat exchanger pipe to the earth formation.

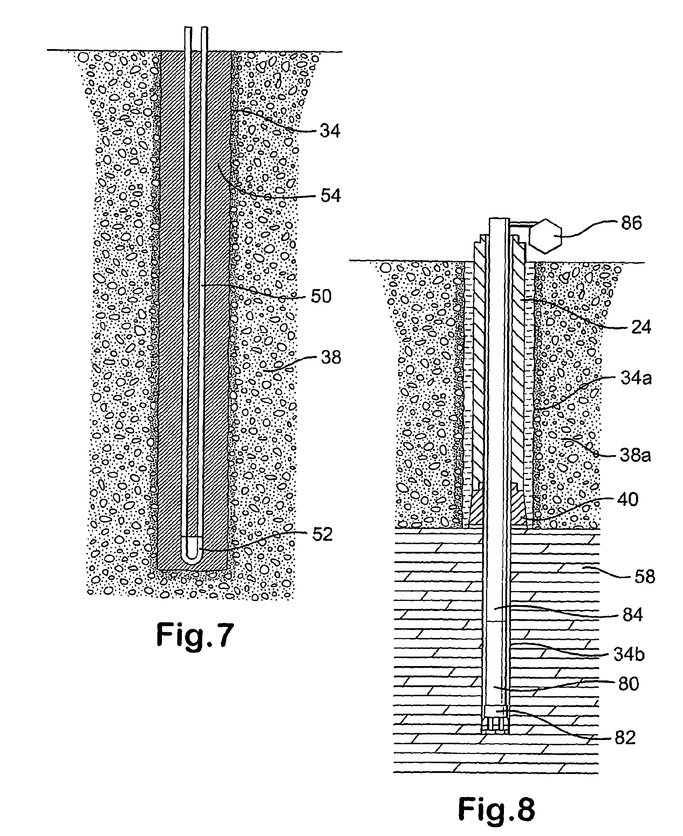

Upon extraction of all of the casing string 24, as shown in Fig. 7, and drilling apparatus 40, grout 54 encases the earth loop 50 and fills the borehole 34. The construction of that particular geothermal heat pump is complete and is left for the grout to set. Further geothermal heat pumps are then constructed in a similar manner on the same site. Once all geothermal heat pumps are completed each heat loop is connected in parallel to a manifold (not shown) for circulation of heat exchange fluid.

Regardless of the stability of the native soils, the steel casing pipe enhances the integrity of the borehole during construction. If a consolidated formation like limestone or granite is encountered, it may be economically desirable to terminate the sonic casing installation once the unconsolidated overburden has been stabilized with casing. A downhole hammer and smaller diameter drill pipe are attached to the sonic drill head, and the remaining borehole depth is finished by compressed air drilling through the casing. Alternatively, a typical solid drill bit and associated apparatus and equipment is used.

Referring to Fig. 8 a borehole 34a (like the borehole 34) is drilled in a formation which may produce a borehole that is prone to collapse, e.g. a formation 38a which is a soft overburden. The borehole 34a is drilled like the borehole 34 described above. When the drill bit 40 reaches the top of a harder and/or more consolidated formation 58 (e.g. a formation of rock, limestone, granite, or sandstone) another type of drilling apparatus 80 is inserted down the interior of the casing string 24 and through the drilling apparatus 40 to continue drilling in the formation 58. The drilling apparatus 80 may be any known suitable solid bit apparatus and/or sacrificial and/or collapsible and/or retrievable bit apparatus. In one particular aspect the drilling apparatus 80 is a downhole air hammer drilling apparatus with a downhole hammer bit apparatus 82 on a drilling string 84 through which compressed air is pumped by a system 86 for operation of the apparatus 82. The drilling apparatus 80 produces an extension 34b of the borehole 34a.

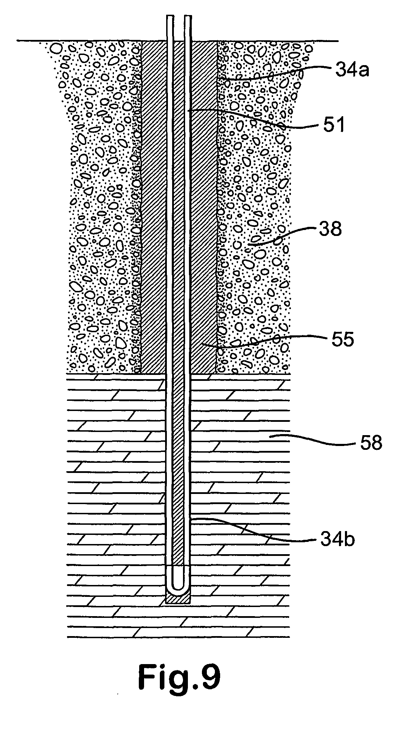

As shown in Fig. 9 a heat loop 51 (like the earth loop 50 described above) has been installed in the borehole 34a, 34b and has been grouted in place with grout 55 (like the grout 54 described above).

In relatively soft formation drilling, casing pipe is fitted with an open drill bit as illustrated in Fig. 1. As the casing pipe is rotated and oscillated by the sonic drill head, water containing approximately 0.5 to 1% polyacrylamide drilling gel, (e.g., but not limited to, E-Z MUD (TM) available from Baroid Corporation), or other synthetic or natural drilling material or polymer is pumped down the casing. Oscillating action of the sonic drill head vibrates the casing (which may be a string of individual pieces of casing joined together) e.g., but not limited to, to resonance thereby liquefying the material in the near-borehole zone extending from the drill bit open end and along the length of the casing within the hole.

## Claims

1. A method of constructing a geothermal heat exchanger, which method comprises the steps of: -
(1) drilling a borehole (34) in the ground using a tubular (28) ; and
(2) installing a heat loop (50) in said borehole (34);
**characterised by** the step of
(3) during step (1) vibrating said tubular (28) and pumping drilling fluid into said tubular (28) to urge material moved by said drilling into an annulus (36) defined by a surface of said borehole (34) and an outer surface of said tubular (28), and/or into formation surrounding said borehole, whereby the inside of said tubular (28) is kept substantially free of said material so that said heat loop (50) may be inserted therein.

2. A method according to claim 1, wherein said drilling fluid is pumped at such a volume per unit time that it displaces a volume of material slightly greater than the combined volume of said tubular (28) and the volume enclosed by said tubular to facilitate advancement of said tubular into the ground.

3. A method according to claim 1 or 2, wherein said vibration is performed so as to liquefy the material in the near-borehole zone extending along the length of said tubular.

4. A method according to claim 1, 2, or 3, further comprising the step of rotating said tubular (28) to assist said drilling.

5. A method according to any preceding claim, further comprising the step of casing said borehole (34) by drilling to a desired depth whilst adding one or more tubular to said tubular to form a string of tubulars (24).

6. A method according to claim 5, further comprising the step of withdrawing said string of tubulars (24) from said borehole.

7. A method according to claim 5 or 6, wherein step (2) is performed before or whilst withdrawing said string of tubulars (24) from said borehole (34).

8. A method according to any preceding claim, wherein step (2) comprises the steps of inserting said heat loop (50) into an interior of said tubular (28), and urging said heat loop toward the bottom of said borehole (34).

9. A method according to claim 8, further comprising the step of substantially filling said heat loop (50) with a fluid before said insertion step.

10. A method according to any preceding claim, wherein step (2) comprises the step of grouting said heat loop (50) in said borehole (34).

11. A method according to any preceding claim, wherein said vibrating step is performed by vibrating said tubular with a sonic drill head (26), whereby said tubular is caused to vibrate in a direction substantially parallel to a longitudinal axis thereof.

12. A method according to claim 11, wherein a frequency of said vibration is between approximately 30Hz and 150Hz.

13. A method according to any preceding claim, wherein said drilling step comprises the step of using a drill bit (40) having a substantially annular body provided with a cutting surface (19).

14. A method according to claim 13, wherein said body has an outer diameter that is greater than an outer diameter of said tubular (28).

15. A method according to claim 13 or 14, wherein said body has an inner diameter that is substantially equal to an inner diameter of said tubular (28).

16. A method according to any preceding claim, further comprising the steps of inserting a drilling means (80) into said tubular (28) or string of tubulars (24), moving said drilling means to the bottom of the borehole (34), and drilling an extension to said borehole.

17. A method as claimed in any preceding claim, further comprising the step of repeating steps (1) to (3) to install a plurality of geothermal heat exchangers on the same site.

18. A method according to any preceding claim, further comprising the step of connecting the or each heat loop with a manifold for circulating heat exchange fluid therethrough.

19. A method according to any preceding claim, further comprising the step of forming said borehole to a depth of between about 46m and 153m.

## Patentansprüche

1. Verfahren zum Konstruieren eines Geothermie-Wärmetauschers, wobei das Verfahren die folgenden Schritte umfasst:
(1) Bohren eines Bohrlochs (34) im Boden unter Verwendung eines Rohrs (28); und
(2) Installieren einer Wärmeschleife (50) in dem Bohrloch (34);
**gekennzeichnet durch** den folgenden Schritt:
(3) während des Schrittes (1) Versetzen des Rohrs (28) in Schwingungen und Pumpen von Bohrfluid in das Rohr (28), um Material, das **durch** das Bohren bewegt wird, in einen Ringraum (36) zu drängen, der **durch** eine Oberfläche des Bohrlochs (34) und eine äußere Oberfläche des Rohrs (28) definiert ist, und/oder in eine das Bohrloch umgebende Formation zu drängen, wodurch die Innenseite des Rohrs (28) im Wesentlichen frei von dem Material gehalten wird, so dass die Wärmeschleife (50) darin eingesetzt werden kann.

2. Verfahren nach Anspruch 1, wobei das Bohrfluid mit einem Volumen pro Einheitszeit gepumpt wird, derart, dass es ein Materialvolumen verdrängt, das etwas größer als das kombinierte Volumen des Rohrs (28) und des von dem Rohr eingeschlossenen Volumens ist, um die Vorwärtsbewegung des Rohrs in den Boden zu erleichtern.

3. Verfahren nach Anspruch 1 oder 2, wobei die Schwingungserzeugung so ausgeführt wird, dass das Material in einer Zone in der Nähe des Bohrlochs, die sich in Längsrichtung des Rohrs erstreckt, verflüssigt wird.

4. Verfahren nach Anspruch 1, 2 oder 3, das ferner den Schritt des Drehens des Rohrs (28), um das Bohren zu unterstützen, umfasst.

5. Verfahren nach einem vorhergehenden Anspruch, das ferner den Schritt des Versehens des Bohrlochs (34) mit einem Futterrohr umfasst, indem bis zu einer gewünschten Tiefe gebohrt wird und zu dem Rohr ein oder mehrere Rohre hinzugefügt werden, um einen Rohrstrang (24) zu bilden.

6. Verfahren nach Anspruch 5, das ferner den Schritt des Herausziehens des Rohrstrangs (24) aus dem Bohrloch umfasst.

7. Verfahren nach Anspruch 5 oder 6, wobei der Schritt (2) vor oder während des Herausziehens des Rohrstrangs (24) aus dem Bohrloch (34) ausgeführt wird.

8. Verfahren nach einem vorhergehenden Anspruch, wobei der Schritt (2) die Schritte des Einsetzens der Wärmeschleife (50) in einen Innenraum des Rohrs (28) und des Drängens der Wärmeschleife in Richtung zum Boden des Bohrlochs (34) umfasst.

9. Verfahren nach Anspruch 8, das ferner vor dem Einsetzschritt den Schritt umfasst, bei dem die Wärmeschleife (50) im Wesentlichen mit einem Fluid gefüllt wird.

10. Verfahren nach einem vorhergehenden Anspruch, wobei der Schritt (2) den Schritt des Eingießens der Wärmeschleife (50) in dem Bohrloch (34) umfasst.

11. Verfahren nach einem vorhergehenden Anspruch, wobei der Schwingungserzeugungsschritt durch Erzeugen von Schwingungen in dem Rohr mit einem Schallbohrkopf (26) ausgeführt wird, wodurch das Rohr dazu veranlasst wird, in einer Richtung zu schwingen, die zu seiner Längsachse im Wesentlichen parallel ist.

12. Verfahren nach Anspruch 11, wobei eine Frequenz der Schwingung im Bereich von etwa 30 Hz bis 150 Hz liegt.

13. Verfahren nach einem vorhergehenden Anspruch, wobei der Bohrschritt den Schritt des Verwendens einer Bohrkrone (40), die einen im Wesentlichen ringförmigen Körper besitzt, der mit einer Schneidoberfläche (19) versehen ist, umfasst.

14. Verfahren nach Anspruch 13, wobei der Körper einen Außendurchmesser besitzt, der größer als ein Außendurchmesser des Rohrs (28) ist.

15. Verfahren nach Anspruch 13 oder 14, wobei der Körper einen Innendurchmesser besitzt, der im Wesentlichen gleich dem Innendurchmesser des Rohrs (28) ist.

16. Verfahren nach einem vorhergehenden Anspruch, das ferner die Schritte des Einsetzens eines Bohrmittels (80) in das Rohr (28) oder in den Rohrstrang (24), das Bewegen des Bohrmittels zum Boden des Bohrlochs (34) und das Bohren einer Verlängerung für das Bohrloch umfasst.

17. Verfahren nach einem vorhergehenden Anspruch, das ferner den Schritt des Wiederholens der Schritte (1) bis (3) umfasst, um mehrere Geothermie-Wärmetauscher am selben Ort zu installieren.

18. Verfahren nach einem vorhergehenden Anspruch, das ferner den Schritt des Verbindens der oder jeder Wärmeschleife mit einem Verteiler umfasst, um Wärmeaustauschfluid durch diese Schleife(n) zirkulieren zu lassen.

19. Verfahren nach einem vorhergehenden Anspruch, das ferner den Schritt des Bildens des Bohrlochs bis zu einer Tiefe im Bereich von etwa 46 m bis etwa 153 m umfasst.

## Revendications

1. Procédé de construction d'un échangeur thermique géothermique, lequel procédé comprend les étapes consistant à :
(1) forer un trou de sondage (34) dans le sol en utilisant une tubulure (28) ; et
(2) mettre en place une boucle thermique (50) dans ledit trou de sondage (34) ;
**caractérisé par** l'étape consistant à :
(3) pendant l'étape (1), faire vibrer ladite tubulure (28) et pomper un fluide de forage dans ladite tubulure (28) pour pousser le matériau déplacé par ledit forage dans un anneau (36) défini par une surface dudit trou de sondage (34) et une surface extérieure de ladite tubulure (28), et/ou dans une formation entourant ledit trou de sondage de sorte que l'intérieur de ladite tubulure (28) soit maintenu essentiellement exempt dudit matériau de façon que ladite boucle thermique (50) puisse y être insérée.

2. Procédé selon la revendication 1 dans lequel ledit fluide de forage est pompé au niveau d'un volume par unité de temps tel qu'il déplace un volume de matériau légèrement plus grand que le volume combiné de ladite tubulure (28) et le volume ceint par ladite tubulure afin de faciliter une progression de ladite tubulaire dans le sol.

3. Procédé selon la revendication 1 ou 2, dans lequel ladite vibration est exécutée de façon à liquéfier le matériau situé dans la zone proche du trou de sondage s'étendant le long de ladite tubulure.

4. Procédé selon la revendication 1, 2 ou 3, comprenant, de plus, l'étape consistant à faire tourner ladite tubulure (28) afin d'aider audit forage.

5. Procédé selon l'une quelconque des revendications précédentes, comprenant, de plus, l'étape consistant à réaliser un cuvelage dudit trou de sondage (34) en forant à une profondeur souhaitée tout en ajoutant une ou plusieurs tubulure(s) à ladite tubulure pour former une rame de tubulures (24).

6. Procédé selon la revendication 5 comprenant, de plus, l'étape consistant à retirer ladite rame de tubulures (24) dudit trou de sondage.

7. Procédé selon la revendication 5 ou 6 dans lequel l'étape (2) est exécutée avant ou pendant le retrait de ladite rame de tubulures (24) dudit trou de sondage (34).

8. Procédé selon l'une quelconque des revendications précédentes dans lequel l'étape (2) comporte les étapes consistant à insérer ladite boucle thermique (50) à l'intérieur de ladite tubulure (28), et à pousser ladite boucle thermique vers le fond dudit trou de sondage (34).

9. Procédé selon la revendication 8 comprenant, de plus, l'étape consistant à remplir essentiellement ladite boucle thermique (50) avec un fluide avant l'étape d'insertion.

10. Procédé selon l'une quelconque des revendications précédentes, dans lequel l'étape (2) comporte l'étape consistant à injecter ladite boucle thermique (50) dans ledit trou de sondage (34).

11. Procédé selon l'une quelconque des revendications précédentes dans lequel ladite étape de mise en vibration est exécutée en faisant vibrer ladite tubulure avec une tête de forage à vibrations acoustiques (26), de sorte que ladite tubulure est entraînée à vibrer dans une direction essentiellement parallèle à son axe longitudinal.

12. Procédé selon la revendication 11 dans lequel une fréquence de ladite vibration se situe approximativement entre 30Hz et 150 Hz.

13. Procédé selon l'une quelconque des revendications précédentes, dans lequel ladite étape de forage comporte l'étape consistant à utiliser un trépan de forage (40) possédant un corps essentiellement annulaire doté d'une surface de coupe (19).

14. Procédé selon la revendication 13 dans lequel ledit corps présente un diamètre extérieur qui est supérieur à un diamètre extérieur de ladite tubulure (28).

15. Procédé selon la revendication 13 ou 14, dans lequel ledit corps présente un diamètre intérieur qui est essentiellement égal à un diamètre intérieur de ladite tubulure (28).

16. Procédé selon l'une quelconque des revendications précédentes comprenant, de plus, les étapes consistant à insérer des moyens de forage (80) dans ladite tubulure (28) ou dans ladite rame de tubulures (24), à déplacer lesdits moyens de forage vers le fond du trou de sondage (34) et à forer une extension dudit trou de sondage.

17. Procédé selon l'une quelconque des revendications précédentes comprenant, de plus, l'étape consistant à répéter les étapes (1) à (3) afin d'installer une pluralité d'échangeurs thermiques géothermiques sur le même site.

18. Procédé selon l'une quelconque des revendications précédentes comprenant, de plus, l'étape consistant à raccorder la boucle thermique ou chacune des boucles thermiques avec un collecteur pour faire circuler à travers elle(s) ledit fluide d'échange thermique.

19. Procédé selon l'une quelconque des revendications précédentes comprenant, de plus, l'étape consistant à former ledit trou de sondage à une profondeur comprise approximativement entre 46 m et 153 m.
